# EUROPÄISCHE PATENTSCHRIFT

(11) **EP 1 595 241 B1**
(45) Veröffentlichungstag und Bekanntmachung des Hinweises auf die Patenterteilung: **31.12.2008**
(21) Anmeldenummer: 04712522.4
(22) Anmeldetag: 19.02.2004
(51) Int. Cl.: G09F 13/00, G09F 19/22, F21S 4/00

(54) **LEITSYSTEM UND VERFAHREN ZUR WEGSTRECKENFÜHRUNG**
GUIDANCE SYSTEM AND NAVIGATION METHOD
SYSTEME DE COMMANDE ET PROCEDE POUR INDIQUER UN PARCOURS

(30) Priorität: 19.02.2003 DE 20302701 U
(43) Veröffentlichungstag der Anmeldung: 16.11.2005
(60) Teilanmeldung: 06026419.9
(73) Patentinhaber: Fraport Ag, 60547 Frankfurt am Main (DE)
(72) Erfinder: HIGELIN, Jean-Claude, 68220 Hégenheim (FR)
(74) Vertreter: Degwert, Hartmut
(86) Internationale Anmeldenummer: PCT/EP2004/001642
(87) Internationale Veröffentlichungsnummer: WO 2004/075148

(56) Entgegenhaltungen:
- WO-A-96/39687
- GB-A- 2 215 105
- US-A1- 2002 057 204
- US-A1- 2002 193 973

## Beschreibung

Die Erfindung betrifft ein Leitsystem für einen Gehbereich in Gebäuden, Gebäudekomplexen und Verkehrszonen, die eine Mehrzahl von miteinander durch Verkehrswege verbundenen Zielorten aufweisen, sowie ein Verfahren zur Wegstreckenführung in einer solchen Umgebung.

Herkömmliche Leitsysteme in Gebäudekomplexen, Fußgängerzonen und dergleichen beruhen auf der Anwendung von Hinweisschildern, die sowohl Schrift als auch Symbole tragen können. In weitläufigen Gehbereichen ist eine große Anzahl dieser Hinweisschilder erforderlich, da die Lesbarkeit mit zunehmender Entfernung abnimmt. Je größer die Anzahl von Zielorten ist, desto unübersichtlicher und verwirrender wird die Vielzahl der benötigten Hinweisschilder. In einer Umgebung, in der Zielorte ohne Umwege und ohne Zeitverlust erreicht werden müssen, kommt dem Leitsystem eine besondere Bedeutung zu. Flughäfen, die oft aus mehreren Terminals bestehen, sind ein herausragendes Beispiel für eine solche Umgebung. Bei Transit- bzw. Transferflügen müssen die Passagiere oft lange Strecken zurücklegen, um von einem Terminal zum anderen zu gelangen. Die Vermeidung von Umwegen und Zeitverlusten ist oft Voraussetzung für das Erreichen von Anschlussflügen. Die Erfahrung zeigt, dass herkömmliche Leitsysteme oft nicht oder nicht rechtzeitig erkannt oder verstanden werden. Insbesondere gibt ein auf Hinweisschildern beruhendes Leitsystem nicht jedem Passagier die erwünschte Führung, besondern in internationaler Umgebung, wenn in verschiedenen Sprachen oder gar unterschiedlichen Schriften ausgeschildert werden muß. Die an Verzweigungen erforderliche Anhäufung von Hinweisschildern verhindert ein schnelles Erkennen und Verstehen. Oft ist auch die Sicht auf Hinweisschilder versperrt. Die Folge sind Nichterkennung, Nichtbeachtung und Fehldeutung der gegebenen Hinweise bis hin zu Orientierungsfehlern, die den Passagier eine um 180° falsche Richtung einschlagen lassen.

In der US-A-2002/0057204 ist ein Leitsystem zum Auffinden von Notausgängen gezeigt, das durch grünleuchtende Pfeile, die in Richtung der Notausgänge zeigen, gebildet ist. Bereiche, die aufgrund einer Gefahr wie beispielsweise Feuer nicht mehr begehbar sind, sind durch rotleuchtende Kreuze gekennzeichnet. Entlang der Fluchtwege ist jeweils eine Weisungslinie angeordnet, die in Richtung des nächstgelegenen Notausganges zeigt.

In der US-A-2002/0193973 ist ein Leitsystem für Passagiere in einem Flughafengebäude gezeigt, das ein Informationszentrum aufweist, an dem die Passagiere aktuelle Informationen zu dem jeweiligen Flug abrufen können. Die Informationen können beispielsweise über ein Mobiltelefon, ein tragbares Informationsterminal oder Reisepaß mit Speicherchip ("image-attached smart passport card") abgerufen werden, die mit dem Informationszentrum kommunizieren können. Über das Mobiltelefon, das tragbare Informationsterminal bzw. den elektronischen Reisepaß kann auch die Position des Passagiers innerhalb des Flughafengebäudes bestimmt werden. Das Leitsystem weist ferner eine großformatige Anzeigetafel für Informationen betreffend die ankommenden bzw. abfliegenden Flugzeuge, Umtauschkurse, Informationen administrativer Art usw. auf.

In der GB-A-2 215 105 ist ein Leitsystem für Notfallsituationen gezeigt, bei dem Weisungslinien durch kontinuierlich wahrnehmbare Lichter bereitgestellt sind, die so geschaltet sind, daß eine Richtungsinformation in Richtung der Notausgänge entsteht. Die Weisungslinien für jeden Notausgang sind gleich ausgestaltet.

Durch die Erfindung wird ein Leitsystem für derartige Umgebungen geschaffen, das sich durch vollkommene Sichtbarkeit, Erkennbarkeit und Verfügbarkeit in jeder Zone des Gehbereichs sowie durch intuitive Verständlichkeit auszeichnet, so dass die Zielorte auf direktestem Weg und ohne Zeitverlust erreicht werden können. Bei dem erfindungsgemäßen Leitsystem sind entlang den Verkehrswegen, welche die Zielorte miteinander verbinden, durchgehende optische Weisungslinien angeordnet. Diese Weisungslinien unterscheiden sich durch verschiedene, leicht erkennbare optische Merkmale, insbesondere Farben, in leicht erkennbarer Weise voneinander je nach zugeordnetem Zielort. Ferner sind die Weisungslinien mit steuerbaren Richtungsanzeigemerkmalen ausgestattet, die in die Richtung des zugeordneten Zielortes zeigen. Die Weisungslinien enden jeweils an dem zugeordneten Zielort. Verkehrswege, die zu mehreren Zielorten führen, sind von mehreren, den Zielorten entsprechenden, durchgehenden Weisungslinien begleitet. Die Zielorte umfassen Verteilerzielorte und Endzielorte, wobei an einem Verteilerzielort sowohl Verkehrswege enden, die zu Endzielorten verzweigten, als auch Verkehrswege mit zugehörigen Weisungslinien durchgeleitet sind, die zu anderen Zielorten führen. Wenn alle Verkehrswege des Gehbereichs mit derartigen Weisungslinien ausgestattet sind, können die Benutzer des Systems zu dem gewünschten Zielort gelangen, indem sie einfach der entsprechenden Weisungslinie folgen. Diese sind von überall aus gut sichtbar hoch genug an Wänden oder im Deckenbereich "über Kopf" angeordnet, so dass die Sicht auf die Weisungslinien nicht oder allenfalls nur sehr kurzzeitig versperrt werden kann. In Gebäuderäumen von großer Höhe können die Weisungslinien auch im Bodenbereich angeordnet werden. Gleich, an welchem Ort innerhalb weitläufiger Gebäudekomplexe sich ein Passant aufhält, findet er immer eine Weisungslinie für den gewünschten Zielort vor und kann dieser entlang beliebig komplexen Verkehrswegen folgen. Das Leitsystem ist stets und überall präsent. Es ist eindeutig und lässt keinen Raum für Fehldeutungen oder Verwechslungen. Auch bei willkürlichem Verlassen des zu dem gewünschten Zielort führenden Verkehrsweges, beispielsweise zum Aufsuchen eines Geschäftes, Restaurants oder Ruheraumes, geht die Orientierung nicht verloren, denn jeder nach Verlassen des aufgesuchten Ortes erreichte Verkehrsweg ist wiederum mit einer zum gewünschten Zielort führenden Weisungslinie versehen.

Die Zuordnung der Weisungslinien zu den Zielorten erfolgt anhand von optischen Merkmalen, insbesondere Farben innerhalb des Regenbogenspektrums und Mustern. Zusätzlich können Symbole, Buchstaben und Ziffern verwendet werden. Diese Symbole, Buchstaben und Ziffern sind in Abständen entlang den entsprechenden Weisungslinien angeordnet.

Die materielle Ausbildung der Weisungslinien kann in vielfältiger Weise erfolgen. Geeignet sind insbesondere farbige Leuchtstreifen in Kombination mit pulsierender Lichtmodulation oder Lauflichtern zur Anzeige der Bewegungsrichtung zum Zielort, ebenso wie Lichtprojektionseinrichtungen und von einer Decke abgehängte Lichtbänder aus LED-Elementen.

Bei einer besonders vorteilhaften Ausführungsform des Leitsystems sind die Weisungslinien den Zielorten und Verkehrswegen nicht starr, sondern nach Bedarf zugeordnet. Damit ist es beispielsweise im Notfall möglich, alle Verkehrswege auf Fluchtwege umzuleiten. Ferner besteht die Möglichkeit, momentan überlastete Verkehrswege zu umgehen, Verkehrsströme aufzuteilen und kurzfristige Änderungen von Zielorten vorzunehmen. Wenn beispielsweise ein Verkehrsweg nach Ankunft eines Großraumflugzeugs vorübergehend überlastet ist, kann es zweckmäßig sein, einen Umweg in Kauf zu nehmen, um Zeitverluste durch kollidierende Verkehrsströme zu vermeiden.

Für Gehbereiche mit Endzielorten, die über gemeinsame Verteilerzielorte erreicht werden, sieht die Erfindung vor, dass die Weisungslinien jeweils zwischen Verteilerzielort und Endzielort erkennbar verschieden, jedoch mit leicht erkennbarer gemeinsamer Eigenschaft ausgestattet sind. Natürlich kann ein Verteilerzielort zugleich auch Endzielort sein, ebenso wie Verkehrswege an Verteilerzielorten durchgeleitet sein können, um zu anderen Endzielorten oder Verteilerzielorten zu führen.

Gegenstand der Erfindung ist ferner ein Verfahren zur Wegstreckenführung in einem Gehbereich öffentlicher Gebäude, Gebäudekomplexe und Verkehrszonen, die eine Mehrzahl von miteinander durch Verkehrswege verbundenen Zielorten aufweisen. Nach diesem Verfahren werden entlang den Verkehrswegen durchgehende optische Weisungslinien angeordnet, die jeweils einem Zielort zugeordnet sind, an dem zugeordneten Zielort enden und sich leicht erkennbar, insbesondere durch ihre Farbe, voneinander unterscheiden. Die Weisungslinien werden mit eindeutigen optischen Richtungsanzeigemerkmalen versehen, die in die Richtung des zugeordneten Ziels zeigen. Die Weisungslinien werden ferngesteuert aus streckenweise selektiv aktivierten Anzeigeeinrichtungen zusammengesetzt. Die Fernsteuerung erfolgt insbesondere durch eine zentrale Leitstelle über ein Netzwerk, an das auch die Steuereinheiten angeschlossen sind, die die Anzeigeeinrichtungen ansteuern. Verkehrswege, die zu mehreren Zielorten führen, werden mit mehreren, den Zielorten entsprechenden Weisungslinien versehen. Die Zielorte umfassen Verteilerzielorte und Endzielorte, wobei an einem Verteilerzielort sowohl Verkehrswege enden, die zu Endzielorten verzweigen, als auch Verkehrswege mit zugehörigen Weisungslinien durchgeleitet werden, die zu anderen Zielorten führen.

Eine vorteilhafte Weiterbildung des erfindungsgemäßen Leitsystems und des erfindungsgemäßen Verfahrens besteht darin, dass an gut zugänglichen Orten Informationsterminals bereitgestellt werden, an denen Benutzer identifiziert und Benutzerdaten abgerufen werden können, besonders in Kombination mit einem Informationssystem, das benutzerspezifische Informationen an ausgewählten Stellen der Gebäude, Verkehrswege und Zielorte ausgibt. Die Identifizierung eines Benutzers kann anhand von elektronischen Datenträgern erfolgen. Zur Verwirklichung eines solchen Systems können bekannte Datenträger wie Chipkarten und Transponderchips verwendet werden. Letztere eignen sich zur Fernabfrage und können beispielsweise in Bordkarten integriert sein. Der in Bordkarten gespeicherte Code enthält bereits umfangreiche Informationen über den Passagier und seine Flugdaten. Wenn beispielsweise ein Transfer-Passagier sich einer Identifikationsstation nähert, können ihm akustische und/oder optische Hinweise präsentiert werden, die ihm zum Auffinden seines Zielortes nützlich sind ("Folgen Sie der blauen Weisungslinie bis zum Terminal Blau 17"), ebenso wie personenbezogene Informationen ("Bitte zu Hause anrufen"). Besonders vorteilhaft ist die direkte individuelle Information eines Passagiers in Fällen einer durch Verspätung notwendig gewordenen Umbuchung. In einem solchen Fall kann die Umbuchung automatisch erfolgen, und der Passagier erhält ohne Zeitverzug alle aktuellen Informationen über den (geänderten) Anschlussflug, einschließlich einer beruhigenden Mitteilung, dass sein Gepäck entsprechend umgeladen wurde. Durch das Leitsystem wird er dann zuverlässig zu seinem Zielort, dem neuen Flugsteig, geführt.

In Weiterbildung dieses Konzepts, das die Verwendung individueller Datenträger voraussetzt, werden die durch kontaktlose Abfrage abgerufenen individuellen Daten dazu verwendet, dem Individuum Botschaften, z.B. Werbeangebote, auf Anzeigetafeln zu präsentieren, die entlang des von Weisungslinien begleiteten Weges aufgestellt sind. Ferner kann der Passagier an Identifikationsstationen mit automatischer Datenerfassung ("Informationskiosk") einen Ausdruck der relevanten Flugdaten in seiner Landessprache abrufen, vorzugsweise in Form eines Handzettels, der darüber hinaus abtrennbare Coupons umfaßt, die ihn (und nur ihn persönlich) zum Einkauf von Waren zu Vorzugspreisen in bestimmten Geschäften berechtigen, an denen ihn die Weisungslinien vorbei oder zu ihnen hin führen, vorzugsweise Geschäfte in der Nähe des Zielortes (insbesondere des Flugsteigs), also Orte, zu denen der Anlagenbetreiber (z.B. Flughafengesellschaft) den Passagier lenken möchte.

Weitere Merkmale und Vorteile der Erfindung ergeben sich aus der folgenden Beschreibung und aus den Zeichnungen, auf die Bezug genommen wird. In den Zeichnungen zeigen:
- Figur 1 in schematischer Perspektivansicht ein Anwendungsbeispiel des erfindungsgemäßen Leitsystems;
- Figur 2 eine Detailansicht des Anwendungsbeispiels mit mehreren parallelen Verkehrswegen;
- Figur 3 schematisch die Anwendung des erfindungsgemäßen Leitsystems im Bereich eines mehrere Zielorte verbindenden Verkehrswegs;
- Figur 4 eine Identifikationsstation, wie es von einem Benutzer wahrgenommen wird;
- Figur 5 einen personenbezogenen Handzettel, der von der Identifikationsstation an einen Benutzer ausgegeben wird; und
- Figur 6 die schematische Darstellung eines Zielortes mit hinführenden und mit durchführenden Verkehrswegen.

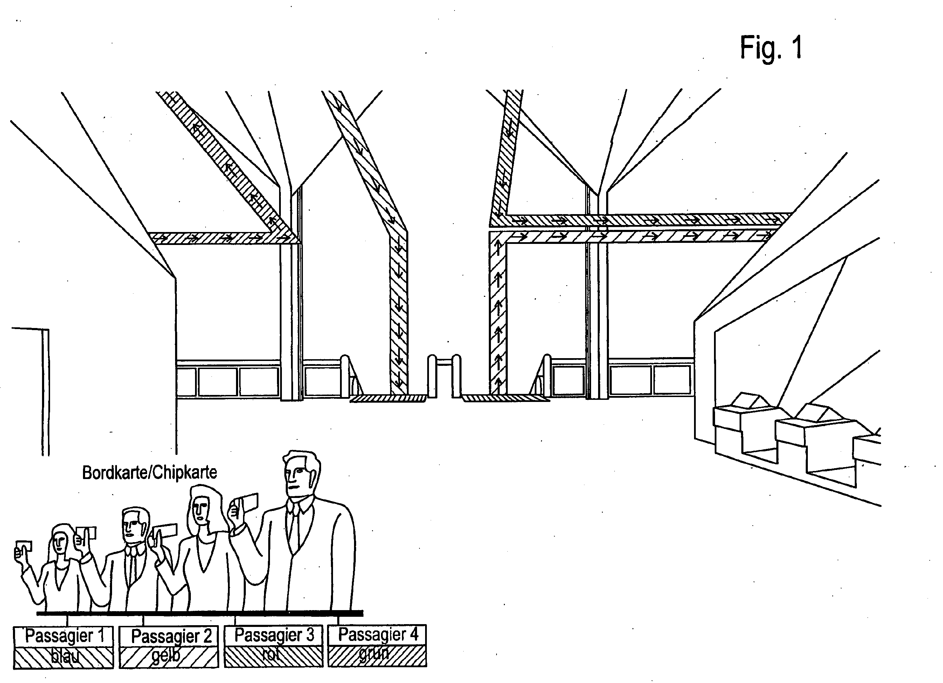

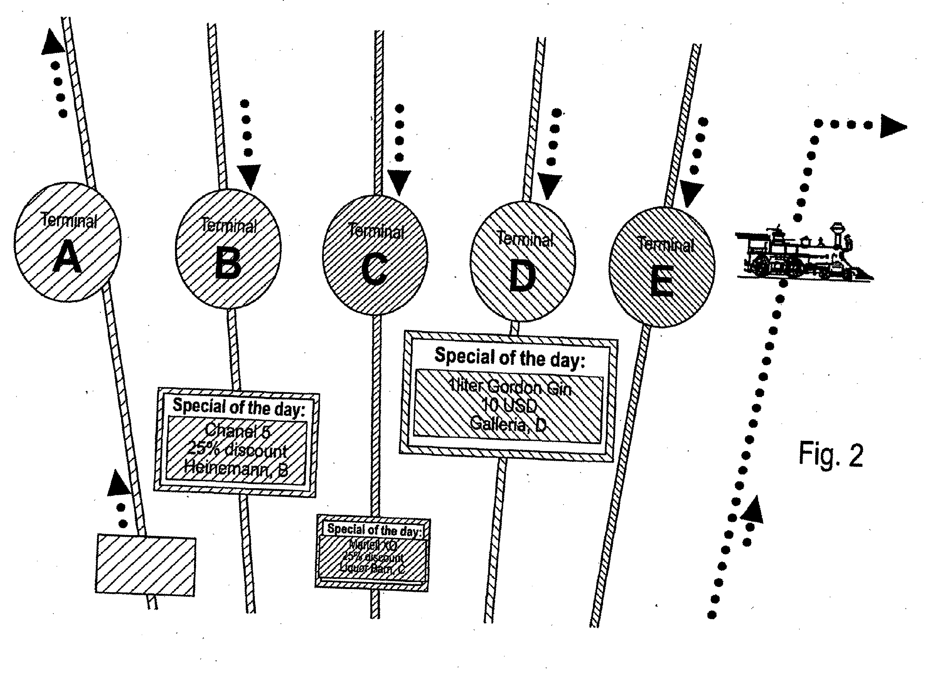

Das in Figur 1 dargestellte Szenario ist einem Flughafengebäude nachempfunden. Ein breiter Korridor endet an einer Brüstung, an der Verkehrswege nach rechts und links abzweigen und Rolltreppen nach unten führen bzw. von unten hochführen. An den Seiten des Korridors sind Check-In-Schalter, Geschäfte, Toilettenräume und dergleichen angeordnet. Verkehrswege, die zu bestimmten Zielorten führen, sind durch farbige Weisungslinien mit Richtungssymbolen bezeichnet. Diese Weisungslinien in Form von Leuchtstreifen mit Richtungsanzeige durch pulsierende Lichtmodulation oder Lauflichter sind gut wahrnehmbar im "Überkopfbereich", also hoch an Wänden oder im Deckenbereich, angeordnet. Der in Figur 1 gezeigte Bereich liegt in einem Terminal eines Flughafens und stellt einen Durchgangsbereich dar. Das in Figur 1 dargestellte Szenario zeigt zwei Rolltreppen, die an einer Brüstung enden, und vier Weisungslinien (Gelb, Grün, Blau, Rot), die bereichsweise parallel verlaufen. Eine grüne Weisungslinie kommt von links und verläuft hinter den Betrachter der Fig. 1. Eine blaue Weisungslinie kommt von hinter dem Betrachter und verläuft über die nach unten führende Rolltreppe. Eine rote Weisungslinie kommt von hinter dem Betrachter und biegt vor den Rolltreppen nach rechts ab. Eine gelbe Weisungslinie kommt von unten über die Rolltreppe und biegt sodann nach rechts (aus Sicht des Betrachters) ab. Jede Weisungslinie gehört zu einem Zielort und endet an diesem. Die zum Ziel weisende Richtung ist in Fig. 2 jeweils durch Pfeilsymbole gekennzeichnet. Diese Richtungspfeile sind aber nur symbolisch. In praktischen Ausführungen haben die Weisungslinien selbst Richtungsanzeigecharakter, der insbesondere durch sich wellenartig ausbreitende, pulsierende Lichtintensitätsmodulation, Farbmodulation oder mit Lauflichtern erzielt wird, in jedem Falle dergestalt, dass die Richtung unmissverständlich und deutlich erkennbar ist, der optische Effekt aber diskret und unaufdringlich bleibt. Die Anordnung der Weisungslinien kann variabel sein, indem beispielsweise eine Weisungslinie erst über einen Bodenbereich und dann über einen Seitenwandbereich verläuft. Die Weisungslinien können auch durch Lichtprojektion oder durch abgehängte Lichtbänder aus LED-Elementen sowie durch dynamische Leuchtstreifen an Boden verwirklicht sein.

In Fig. 2 sind fünf streckenweise parallel verlaufende Verkehrswege gezeigt, die von Weisungslinien begleitet werden und durch je eine Farbe und einen Buchstaben sowie durch Richtungssymbole bezeichnet sind. Dies sind:
A gelb
B orange
C grün
D blau
E rot.

Zusätzlich ist ein schwarz punktierter Verkehrsweg eingezeichnet, der mit einem Eisenbahn-Symbol markiert ist.

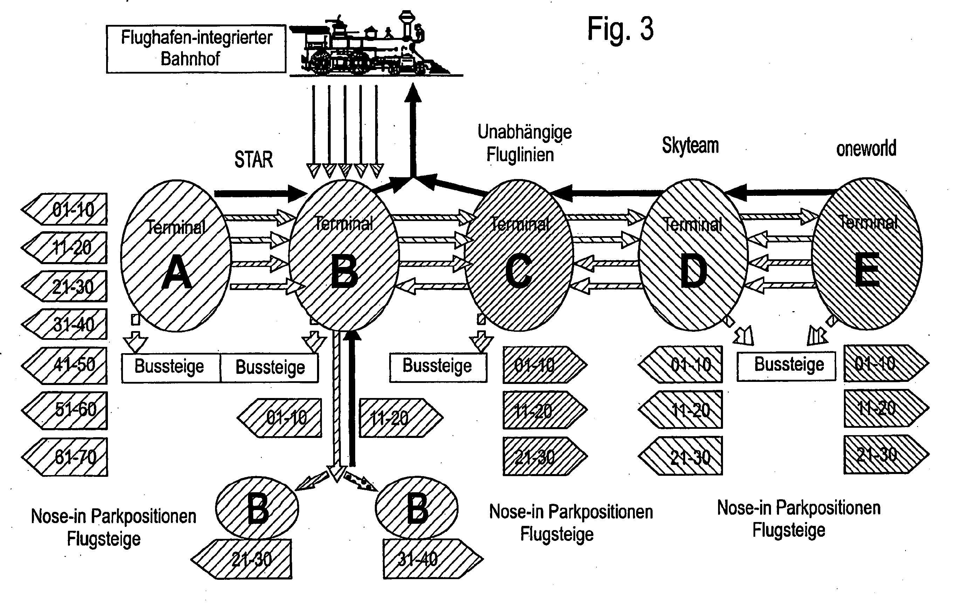

Figur 3 ist eine entsprechende schematische Übersichtsdarstellung eines Flughafens mit fünf Hauptterminals, die mit A, B, C, D und E bezeichnet sind. Jedes der Terminals A bis E stellt einen Zielort dar. Von den Terminals können Verkehrswege abzweigen, die über Verteilerzielorte zu Endzielorten, nämlich Flugsteigen, führen können, wie bei Terminal B gezeigt. Die Verkehrswege zwischen den Terminals A bis E verlaufen parallel, so dass die inneren Terminals durchquert werden müssen, um zu den äußeren zu gelangen. Alle Verkehrswege sind mit Hinweislinien ausgestattet, die an dem zugehörigen lokalen Zielort (z.B. Halle im Terminal) enden. Die Weisungslinien unterscheiden sich voneinander durch die Farbe (mit den entsprechenden Buchstaben oder Ziffern kombiniert), die der Farbe des lokalen Zielortes entspricht. Verkehrswege, die von den lokalen Zielorten abzweigen, sind mit Weisungslinien ausgestattet, die zwar dieselbe Farbe haben wie die des zugehörigen Terminals, sich aber beispielsweise in der Musterung oder Struktur unterscheiden. Bei dem in Figur 3 gezeigten Beispiel geht von dem Terminal B ein Verkehrsweg aus, an dem die Flugsteige 1 bis 10 sowie 11 bis 20 angeordnet sind und der zu einem Verteilerzielort führt, von dem zwei Verkehrswege abzweigen. Der erste dieser zwei Verkehrswege führt zu den Flugsteigen 21 bis 30 und ist durch ein Schrägstreifenmuster gekennzeichnet; der andere führt zu den Flugsteigen 31 bis 40 und ist durch eine Punktmusterung gekennzeichnet. Man sieht bei dem in Figur 3 gezeigten Beispiel, dass jede Hinweislinie an dem zugehörigen Zielort endet. Beispielsweise sind die gelben Hinweislinien, die dem Terminal A zugeordnet sind, alle mit Richtungsanzeigemerkmalen versehen, die in dieselbe Richtung weisen. Hingegen sind beispielsweise dem Terminal C Weisungslinien (Grün) zugeordnet, die von A nach B und von B nach C in einer Richtung weisen und von E nach D sowie von D nach C in der entgegengesetzten Richtung weisen. Auch in Fig. 3 sind die Richtungsanzeigemerkmale durch Pfeilsymbole angedeutet; bei praktischen Ausführungen der Weisungslinien handelt es sich jedoch vorzugsweise um Leucht- oder sonstige Anzeigeeffekte, insbesondere eine pulsierende Lichtintensitäts- oder Farbmodulation.

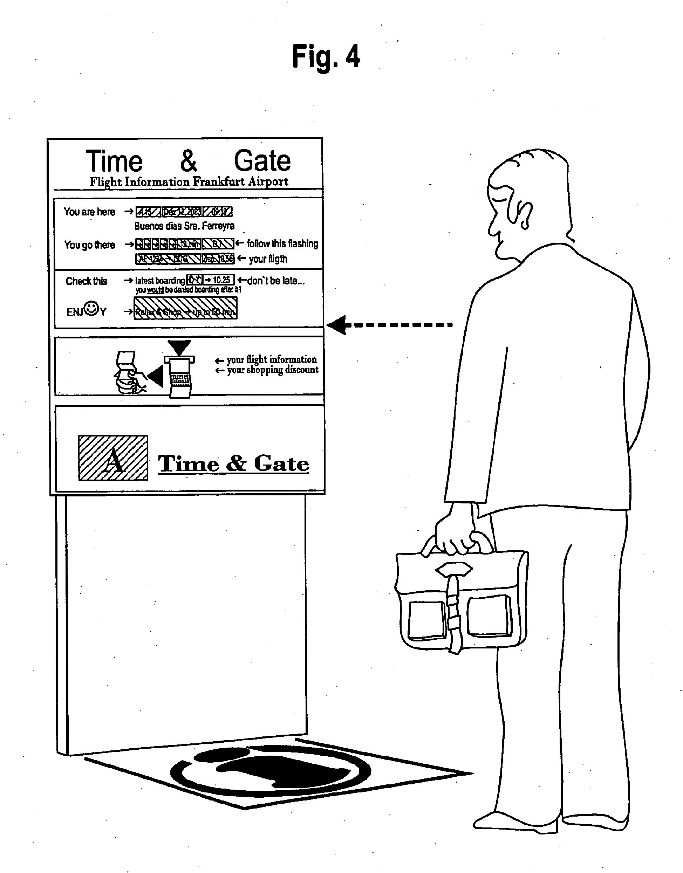

Figur 4 veranschaulicht eine Identifikations- und Informationsstation (bzw. eine automatische Datenerfassungs-Station), die Bestandteil des Leitsystems sein kann. Zahlreiche derartige Stationen können Bestandteil des Leitsystems sein und werden über die Verkehrswege, Ankunftsorte und Zielorte verteilt. Ein sich einer solchen Station nähernder Passagier kann durch Verwendung einer persönlichen Chipkarte oder durch kontaktlose Abfrage bzw. Fernabfrage anhand eines mitgeführten Transponders identifiziert werden. Geeignete Transponderchips sind bekannt; sie können beispielsweise in einer Bordkarte integriert sein. Nach Identifikation und Auswertung relevanter Daten, beispielsweise der Flugdaten und der individuellen Daten des Passagiers wie Name, Sprache usw., werden den Passagieren nützliche Informationen präsentiert, sei es auf Abruf oder auch unaufgefordert. Nützliche Informationen in diesem Zusammenhang sind insbesondere solche, die einem Transit-Passagier Auskunft über das aufzusuchende Terminal und über die voraussichtlich notwendige Zeit zum Erreichen des Zielortes geben, aber auch Informationen kommerzieller Natur, insbesondere Werbung. Da die Station auch die Nationalität eines Passagiers erkennen kann, können die Informationen optisch und/oder akustisch in der entsprechenden Landessprache ausgegeben werden.

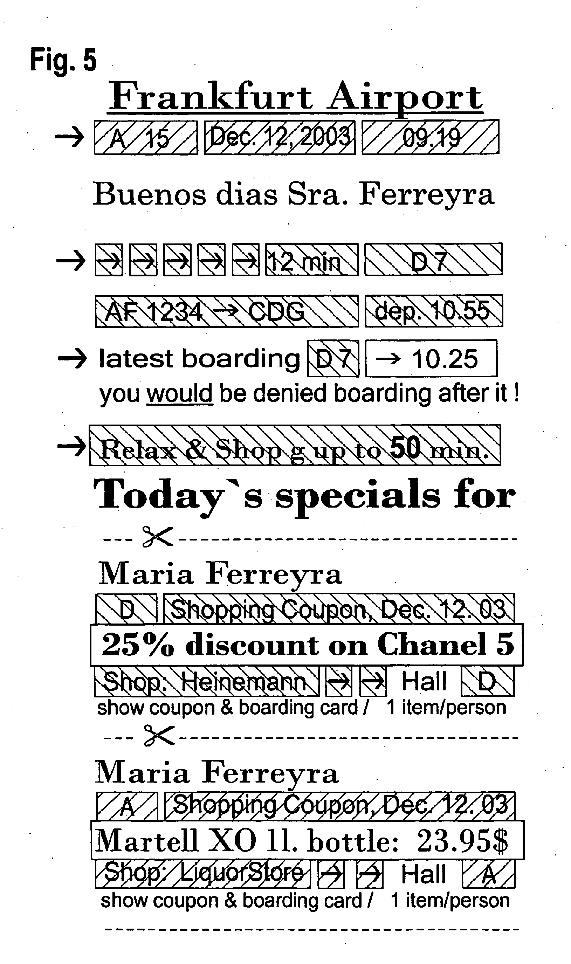

Bei der in Fig. 4 dargestellten Ausführung der Identifikationsstation mit automatischer Datenerfassung ist zusätzlich die Ausgabe eines gedruckten Handzettels vorgesehen. Auf diesem Handzettel findet der Passagier alle für seine Weiterreise oder für seinen Zielort relevanten Daten übersichtlich ausgedruckt, einschließlich einer individuellen Begrüßung. Fig. 5 zeigt ein Beispiel eines solchen Handzettels. Dieser enthält insbesondere
eine Orts- und Zeitangabe
eine individuelle Begrüßung

Flugdaten für einen Weiterflug einschließlich der Informationen zur Wegstrecke bis zum Flugsteig, der geschätzten Zeit für die Hinbegebung und der letztmöglichen Einstiegszeit (denied boarding time out).
persönliche Berechtigungsscheine in Form von abtrennbaren Coupons für den vergünstigten Einkauf bestimmter Waren in bestimmten Geschäften.

Diese Daten werden in der Landessprache des jeweiligen Benutzer ausgegeben (audio / visuell / Ausdruck).

Die persönlichen Berechtigungsscheine sind vorzugsweise auf die bekannten Präferenzen des jeweiligen Passagiers abgestimmt, die z.B. vom Herkunftsland bestimmt sein können.

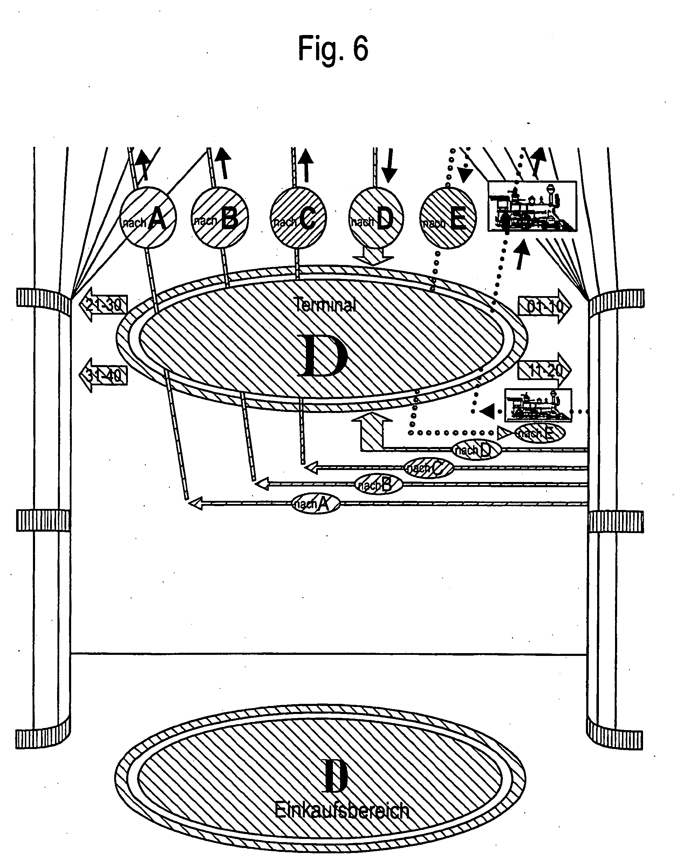

Figur 6 zeigt einen typischen Verteilerzielort, von dem verschiedene Verkehrswege zu Endzielorten abzweigen und von dem zugleich Verkehrswege zu anderen Verteilerzielorten ausgehen. In Figur 5 handelt es sich um den Verteilerzielort "D Blau", an dem der Verkehrsweg "Blau" endet. Endziele sind die Flugsteige 01 bis 10, 11 bis 20, 21 bis 30 und 31 bis 40, zu denen jeweils ein Verkehrsweg abgezweigt ist. Ein zu dem Terminal E führender Verkehrsweg (Rot) wird durch den Verteilerzielort D durchgeleitet. Gleiches kann für die zu den Terminals A, B und C führenden Verkehrswege gelten.

Die Zuordnung der Weisungslinien zu den Verkehrswegen ist nicht statisch, sondern erfolgt nach Bedarf ferngesteuert über einen zentralen Leitstand, an den die Steuereinheiten der optischen Anzeigeeinrichtungen über ein Netzwerk angeschlossen sind.

Anwendung findet das Leitsystem allgemein in öffentlichen oder nichtöffentlichen Umgebungen sowohl mit horizontaler als auch mit vertikaler Ausdehnung, also außer in Flughäfen und Bahnhöfen auch in Hochhäusern, Stadien, Parkplätzen oder Parkhäusern, Fußgängerzonen, Einkaufszentren und dgl..

## Patentansprüche

1. Leitsystem für einen Gehbereich in öffentlichen Gebäuden, Gebäudekomplexen und Verkehrszonen, die eine Mehrzahl von miteinander durch Verkehrswege verbundenen Zielorten aufweisen, wobei
entlang den Verkehrswegen durchgehende optische Weisungslinien angeordnet sind,
die Weisungslinien sich durch verschiedene, leicht erkennbare optische Merkmale, insbesondere Farben, unterscheiden,
die Weisungslinien mit Richtungsanzeigemerkmalen ausgestattet sind, die in die Richtung des zugeordneten Zielorts zeigen,
die Weisungslinien an dem zugeordneten Zielort enden,
die Weisungslinien durch streckenweise selektiv aktivierbare Anzeigeeinrichtungen gebildet sind;
**dadurch gekennzeichnet,**
**daß** Weisungslinien mit verschiedenen optischen Merkmalen verschiedenen Zielorten zugeordnet sind,
**daß** Verkehrswege, die zu mehreren Zielorten führen, von mehreren, den Zielorten entsprechenden, durchgehenden Weisungslinien begleitet sind,
**daß** die Zielorte Verteilerzielorte und Endzielorte umfassen und an einem Verteilerzielort sowohl Verkehrswege enden, die zu Endzielorten verzweigen, als auch Verkehrswege mit zugehörigen Weisungslinien durchgeleitet sind, die zu anderen Zielorten führen.

2. Leitsystem nach Anspruch 1, **dadurch gekennzeichnet, dass** die Weisungslinien von den jeweiligen Zielorten zugeordneten Hinweissymbolen begleitet sind.

3. Leitsystem nach Anspruch 1 oder 2, **dadurch gekennzeichnet, dass** die Zielorte in gleicher Farbe wie die zu ihnen führenden Weisungslinien markiert sind.

4. Leitsystem nach einem der vorstehenden Ansprüche, **dadurch gekennzeichnet, dass** die Weisungslinien verschiedener Zielorte sich durch verschiedene optische Muster unterscheiden.

5. Leitsystem nach einem der vorstehenden Ansprüche, **dadurch gekennzeichnet, dass** die Weisungslinien durch kontinuierlich wahmehmbare Leuchtelemente materialisiert sind.

6. Leitsystem nach einem der vorstehenden Ansprüche, **dadurch gekennzeichnet, dass** die Richtungsanzeigemerkmale der Weisungslinien durch sich wellenartig ausbreitende, pulsierende Lichtintensitäts- oder Farbmodulation materialisiert sind.

7. Leitsystem nach einem der vorstehenden Ansprüche, **dadurch gekennzeichnet, dass** die Richtungsanzeigemerkmale der Weisungslinien durch Lauflichter materialisiert sind.

8. Leitsystem nach einem der vorstehenden Ansprüche, **dadurch gekennzeichnet, dass** die Weisungslinien den Verkehrswegen variabel zugeordnet sind und nach Bedarf streckenweise aktiviert und deaktiviert werden, um Verkehrsströme umzuleiten.

9. Leitsystem nach Anspruch 8, **dadurch gekennzeichnet, dass** die Zielorte der Weisungslinien auf Fluchtwege umgeleitet werden können.

10. Leitsystem nach Anspruch 8, **dadurch gekennzeichnet, dass** wenigstens bestimmte entlang den Verkehrswegen angeordnete Weisungslinien selektiv aktivierbar und deaktivierbar sind.

11. Leitsystem nach Anspruch 8, 9 oder 10, **dadurch gekennzeichnet, dass** die Richtungsanzeigemerkmale wenigstens bestimmter entlang den Verkehrswegen angeordneter Weisungslinien umkehrbar sind.

12. Leitsystem nach einem der vorstehenden Ansprüche, **dadurch gekennzeichnet, dass** die Weisungslinien jeweils zwischen Verteilerzielort und Endzielort erkennbar verschieden, jedoch mit leicht erkennbarer gemeinsamer Eigenschaft ausgestattet sind.

13. Leitsystem nach einem der vorhergehenden Ansprüche, ferner **gekennzeichnet durch** Identifikationsstationen, an denen Benutzer identifiziert und Benutzerdaten abgerufen werden, und **durch** ein Informationssystem, das benutzerspezifische Informationen an ausgewählten Stellen der Gebäude, Verkehrswege und Zielorte ausgibt.

14. Leitsystem nach Anspruch 13, **dadurch gekennzeichnet, dass** die Benutzer mit Datenträgern, insbesondere Transpondereinrichtungen, ausgestattet sind, die an den Identfikationsstationen ausgelesen werden.

15. Leitsystem nach einem der vorstehenden Ansprüche, **dadurch gekennzeichnet, dass** die Weisungslinien im Überkopfbereich angeordnet sind.

16. Leitsystem nach einem der vorstehenden Ansprüche, **dadurch gekennzeichnet, dass** die Weisungslinien teilweise im Bodenbereich angeordnet sind.

17. Leitsystem nach einem der vorstehenden Ansprüche, **gekennzeichnet durch** seine Anwendung in einem mehrere Terminal-Hallen als lokale Zielorte aufweisenden Flughafen.

18. Leitsystem nach einem der Ansprüche 1 bis 17, **gekennzeichnet durch** seine Anwendung in wenigstens einem der folgenden Fälle:
- Einkaufszentrum
- Flughafen
- Bahnhof
- Fußgängerzone
- Vergnügungspark
- Sportstadion
- Ausstellungsgelände
- Parkplatz
- Parkhaus
- Hochhaus.

19. Verfahren zum Aufbau eines Leitsystems zur Wegstreckenführung in einem Gehbereich öffentlicher Gebäude, Gebäudekomplexe und Verkehrszonen nach Anspruch 1, die eine Mehrzahl von miteinander durch Verkehrswege verbundenen Zielorten aufweisen, bei welchem entlang den Verkehrswegen durchgehende optische Weisungslinien angeordnet werden, die sich leicht erkennbar, insbesondere durch ihre Farbe, voneinander unterscheiden, wobei ferner die Weisungslinien mit eindeutigen optischen Richtungsanzeigemerkmalen versehen werden, die in die Richtung des zugeordneten Ziels zeigen, und wobei die Weisungslinien ferngesteuert zusammengesetzt werden aus streckenweise selektiv aktivierten Anzeigeeinrichtungen;
**dadurch gekennzeichnet,**
**daß** Weisungslinien mit verschiedenen optischen Merkmalen verschiedenen Zielorten zugeordnet werden,
**daß** Verkehrswege, die zu mehreren Zielorten führen, mit mehreren, den Zielorten entsprechenden Weisungslinien versehen werden,
**daß** die Zielorte Verteilerzielorte und Endzielorte umfassen und an einem Verteilerzielort sowohl Verkehrswege enden, die zu Endzielorten verzweigen, als auch Verkehrswege mit zugehörigen Weisungslinien durchgeleitet werden, die zu anderen Zielorten führen.

20. Verfahren nach Anspruch 19, **dadurch gekennzeichnet, dass** die Richtung, in die die optischen Richtungsanzeigemerkmale zeigen, nach Bedarf ferngesteuert umgekehrt wird.

21. Verfahren nach Anspruch 19 oder 20, **dadurch gekennzeichnet, dass** die durch die Weisungslinien gebildete Wegstreckenführung nach Bedarf ferngesteuert variiert wird, indem die Anzeigeeinrichtungen entlang unterschiedlichen Verkehrswegstrecken aktiviert werden.

22. Verfahren nach einem der Ansprüche 19 bis 21, **dadurch gekennzeichnet, daß** Benutzer mit Datenträgern ausgestattet werden, auf denen individuelle Daten gespeichert sind, daß die Daten an Identifikationsstationen, die an bestimmten Stellen des Gehbereichs aufgestellt sind, kontaktlos abgerufen werden und daß als Reaktion dem Benutzer aktuelle und benutzerspezifische Informationen verfügbar gemacht werden.

23. Verfahren nach Anspruch 22, **dadurch gekennzeichnet, dass** die Verfügbarmachung der benutzerspezifischen Informationen durch optische Anzeige und/oder Sprache und/oder Ausdrucken und Ausgabe eines Handzettels erfolgt.

24. Verfahren nach Anspruch 23, **dadurch gekennzeichnet, dass** die benutzerspezifischen Informationen auch landesspezifische Präferenzen berücksichtigen.

25. Verfahren nach Anspruch 22, 23 oder 24, **dadurch gekennzeichnet, dass** dem Benutzer entlang den von Weisungslinien begleiteten Verkehrswegen Informationen auf Anzeigetafeln präsentiert werden, die in Relation zu den benutzerspezifischen Informationen stehen.

## Claims

1. A guiding system for a walking zone in public buildings, complexes of buildings and traffic zones, which have a plurality of destinations interconnected by traffic routes, in which:
continuous visual orientation lines are arranged along the traffic routes,
the orientation lines can be distinguished from each other by readily distinguishable visual features, in particular colors,
the orientation lines are equipped with direction indicating features pointing towards the associated destination,
the orientation lines end at the associated destination,
the orientation lines are constituted by display devices which can be selectively activated in sections,
**characterized in that**
the orientation lines having different visual features are associated with different destinations,
traffic routes leading to a plurality of destinations are accompanied by a plurality of continuous orientation lines corresponding to the destinations,
the destinations include distribution destinations and final destinations, and distribution destinations both having traffic routes ending there and branching out to final destinations and passing traffic routes provided with associated orientation lines and leading to other destinations.

2. The guiding system according to claim 1, **characterized in that** the orientation lines are accompanied by information symbols which are associated with the respective destinations.

3. The guiding system according to claim 1 or 2, **characterized in that** the destinations are marked in the same color as the orientation lines leading to them.

4. The guiding system according to any of the preceding claims, **characterized in that** the orientation lines of various destinations differ from each other by different visual patterns.

5. The guiding system according to any of the preceding claims, **characterized in that** the orientation lines are implemented by lighting elements which are continually perceptible.

6. The guiding system according to any of the preceding claims, **characterized in that** the direction indicating features of the orientation lines are implemented by pulsed light intensity or color modulation propagating wavelike.

7. The guiding system according to any of the preceding claims, **characterized in that** the direction indicating features of the orientation lines are implemented by running lights.

8. The guiding system according to any of the preceding claims, **characterized in that** the orientation lines are variably assigned to the traffic routes and can be activated and deactivated in sections according to requirements in order to reroute flows of traffic.

9. The guiding system according to claim 8, **characterized in that** the destinations of the orientation lines can be rerouted to escape routes.

10. The guiding system according to claim 8, **characterized in that** at least some of the orientation lines arranged along the traffic routes can be selectively activated and deactivated.

11. The guiding system according to claim 8, 9 or 10, **characterized in that** the direction indicating features of at least some of the orientation lines, arranged along the traffic routes, can be reversed.

12. The guiding system according to any of the preceding claims, **characterized in that** the respective orientation lines between distribution destination and final destination are observably different, but have one readily distinguishable, common attribute.

13. The guiding system according to any of the preceding claims, further **characterized by** identification stations where users are identified and user data is polled, and by an information system outputting user-specific information at selected places of the buildings, traffic routes and destinations.

14. The guiding system according to claim 13, **characterized in that** the users are provided with data carriers, in particular transponder devices, which are read out at the identification stations.

15. The guiding system according to any of the preceding claims, **characterized in that** the orientation lines are arranged above head height.

16. The guiding system according to any of the preceding claims, **characterized in that** the orientation lines are partially arranged in the floor area.

17. The guiding system according to any of the preceding claims, **characterized by** its application in an airport having a plurality of terminal halls as local destinations.

18. The guiding system according to any of claims 1 to 17, **characterized by** its application in at least one of the following cases:
- shopping center
- airport
- railway station
- pedestrian zone
- amusement park
- sports stadium
- exhibition site
- car park
- parking block
- high-rise building.

19. A method of setting up a guiding system according to claim 1 for traffic routing in a walking zone of public buildings, complexes of buildings and traffic zones having a plurality of destinations interconnected by traffic routes, in which continuous visual orientation lines are arranged along the traffic routes, which orientation lines can readily be distinguished from each other, in particular by their color, the orientation lines being further provided with univocal visual direction indicating features pointing towards the associated destination, and the orientation lines, by remote control, being composed of display devices which are selectively activated in sections,
**characterized in that**
the orientation lines having different visual features are associated with different destinations,
traffic routes leading to a plurality of destinations are provided with a plurality of orientation lines corresponding to the destinations,
the destinations include distribution destinations and final destinations, and distribution destinations both having traffic routes ending there and branching out to final destinations and passing traffic routes provided with associated orientation lines and leading to other destinations.

20. The method according to claim 19, **characterized in that** the direction indicated by the visual direction indicating features is reversed by remote control according to requirements.

21. The method according to claim 19 or 20, **characterized in that** the traffic routing established by the orientation lines is varied by remote control according to requirements, **in that** the display devices are activated along different traffic ways.

22. The method according to any of claims 19 to 21, **characterized in that** users are provided with data carriers storing individual data, that the data is polled in a contact-free manner at identification stations which are installed at selected places of the walking zone, and that in response to this the user receives current and user-specific information.

23. The method according to claim 22, **characterized in that** making available the user-specific information is effected by visual indication and/or by voice and/or printing and delivering a handbill.

24. The method according to claim 23, **characterized in that** the user-specific information also takes into account country-specific preferences.

25. The method according to claim 22, 23 or 24, **characterized in that** along the traffic routes accompanied by the orientation lines, information which is in relation to the user-specific information is presented to the user on display panels.

## Revendications

1. Système de guidage pour une zone de marche piétonne dans des bâtiments publics, des complexes de bâtiments et des zones de circulation qui comprennent une pluralité de destinations reliées les unes aux autres par des voies de circulation, dans lequel:
- des lignes d'orientation visuelles continues sont disposées le long des voies de circulation ;
- les lignes d'orientation se distinguent par des attributs visuels facilement reconnaissables, en particulier par des couleurs ;
- les lignes d'orientation sont pourvues d'attributs d'indication de direction qui montrent en direction de la destination associée ;
- les lignes d'orientation se terminent à la destination associée ;
- les lignes d'orientation sont réalisées par des dispositifs d'affichage qui peuvent être activés sélectivement par sections,
**caractérisé en ce que**
les lignes d'orientation avec différents attributs visuels sont associées à différentes destinations,
**en ce que** des voies de circulation menant à plusieurs destinations sont accompagnées de plusieurs lignes d'orientation continues correspondant aux destinations,
**en ce que** les destinations comprennent des destinations de répartition et des destinations finales, et à une destination de répartition non seulement se terminent des voies de circulation qui se ramifient vers des destinations finales, mais passent également des voies de circulation pourvues de lignes d'orientation associées et menant à d'autres destinations.

2. Système de guidage selon la revendication 1, **caractérisé en ce que** les lignes d'orientation sont accompagnées de symboles informatifs associés aux destinations respectives.

3. Système de guidage selon la revendication 1 ou 2, **caractérisé en ce que** les destinations sont marquées de la même couleur que les lignes d'orientation menant à celles-ci.

4. Système de guidage selon l'une des revendications précédentes, **caractérisé en ce que** les lignes d'orientation de destinations différentes se distinguent les unes des autres par différents dessins visuels.

5. Système de guidage selon l'une des revendications précédentes, **caractérisé en ce que** les lignes d'orientation sont matérialisées par des éléments lumineux continuellement perceptibles.

6. Système de guidage selon l'une des revendications précédentes, **caractérisé en ce que** les attributs d'indication de direction des lignes d'orientation sont matérialisés par modulation pulsante d'intensité lumineuse ou de couleur se propageant par vagues.

7. Système de guidage selon l'une des revendications précédentes, **caractérisé en ce que** les attributs d'indication de direction des lignes d'orientation sont matérialisés par des lumières courantes.

8. Système de guidage selon l'une des revendications précédentes, **caractérisé en ce que** les lignes d'orientation sont associées aux voies de circulation de manière variable et sont activées et désactivées par sections selon les besoins afin de dévier des flux de circulation.

9. Système de guidage selon la revendication 8, **caractérisé en ce que** les destinations des lignes d'orientation peuvent être déviées vers des sorties de secours.

10. Système de guidage selon la revendication 8, **caractérisé en ce qu'**au moins certaines lignes d'orientation disposées le long des voies de circulation peuvent être activées et désactivées de manière sélective.

11. Système de guidage selon la revendication 8, 9 ou 10, **caractérisé en ce que** les attributs d'indication de direction d'au moins certaines lignes d'orientation disposées le long des voies de circulation sont réversibles.

12. Système de guidage selon l'une des revendications précédentes, **caractérisé en ce que** les lignes d'orientation diffèrent les unes des autres de manière reconnaissable entre la destination de répartition et la destination finale mais sont pourvues d'une particularité commune facilement reconnaissable.

13. Système de guidage selon l'une des revendications précédentes, **caractérisé en outre par** des stations d'identification où des utilisateurs sont identifiés et des données de l'utilisateur sont appelées, et par un système d'information fournissant des informations spécifiques à l'utilisateur à des endroits choisis des bâtiments, des voies de circulation et des destinations.

14. Système de guidage selon la revendication 13, **caractérisé en ce que** les utilisateurs sont équipés de supports de données, plus particulièrement de dispositifs transpondeurs qui sont lus aux stations d'identification.

15. Système de guidage selon l'une des revendications précédentes, **caractérisé en ce que** les lignes d'orientation sont disposées dans la zone au-dessus de la tête.

16. Système de guidage selon l'une des revendications précédentes, **caractérisé en ce que** les lignes d'orientation sont en partie disposées au sol.

17. Système de guidage selon l'une des revendications précédentes, **caractérisé par** sa mise en oeuvre dans un aéroport comprenant plusieurs halls de terminal en tant que destinations locales.

18. Système de guidage selon l'une des revendications 1 à 17, **caractérisé par** sa mise en oeuvre dans au moins l'un des cas suivants :
- centre commercial
- aéroport
- gare
- zone piétonnière
- parc d'attractions
- stade
- terrain d'exposition
- parking
- parking couvert
- immeuble tour.

19. Procédé pour établir un système de guidage pour le pilotage de parcours dans une zone de marche piétonne de bâtiments publics, de complexes de bâtiments et de zone de circulation selon la revendication 1, qui comprennent une pluralité de destinations reliées les unes aux autres par des voies de circulation, dans lequel le long des voies de circulation sont disposées des lignes d'orientation visuelles continues qui se distinguent facilement les unes des autres, en particulier par leur couleur, les lignes d'orientation étant en outre pourvues d'attributs d'indication de direction visuels clairs qui montrent en direction de la destination associée, et les lignes d'orientation étant assemblées par télécommande à partir de dispositifs d'affichage sélectivement activés par sections,
**caractérisé en ce que**
les lignes d'orientation avec différents attributs visuels sont associées à différentes destinations,
**en ce que** des voies de circulation menant à plusieurs destinations sont accompagnées de plusieurs lignes d'orientation correspondant aux destinations,
**en ce que** les destinations comprennent des destinations de répartition et des destinations finales, et à une destination de répartition non seulement se terminent des voies de circulation qui se ramifient vers des destinations finales, mais passent également des voies de circulation pourvues de lignes d'orientation associées et menant à d'autres destinations.

20. Procédé selon la revendication 19, **caractérisé en ce que** la direction dans laquelle montrent les attributs visuels d'indication de direction est inversée par télécommande selon les besoins.

21. Procédé selon la revendication 19 ou 20, **caractérisé en ce que** le pilotage de parcours réalisé par les lignes d'orientation est varié par télécommande selon les besoins en activant les dispositifs d'affichage le long de différents trajets de circulation.

22. Procédé selon l'une des revendications 19 à 21, **caractérisé en ce que** des utilisateurs sont équipés de supports de données sur lesquels des données individuelles sont mémorisées, **en ce que** les données sont appelées sans contact à des stations d'identification placées à des endroits déterminés de la zone de marche piétonne, et **en ce qu'**en réponse, des informations actuelles et spécifiques à l'utilisateur sont mises à disposition de l'utilisateur.

23. Procédé selon la revendication 22, **caractérisé en ce que** la mise à disposition des informations spécifiques à l'utilisateur est effectuée par affichage visuel et/ou par parole et/ou par impression et distribution d'une fiche.

24. Procédé selon la revendication 23, **caractérisé en ce que** les informations spécifiques à l'utilisateur tiennent également compte des préférences spécifiques à un pays.

25. Procédé selon la revendication 22, 23 ou 24, **caractérisé en ce que** des informations sont présentées à l'utilisateur sur des tableaux d'affichage le long des voies de circulation accompagnées de lignes d'orientation, ces informations étant en relation avec les informations spécifiques à l'utilisateur.
